# EUROPÄISCHE PATENTSCHRIFT

(11) **EP 1 924 468 B1**
(45) Veröffentlichungstag und Bekanntmachung des Hinweises auf die Patenterteilung: **14.10.2009**
(21) Anmeldenummer: 06762926.1
(22) Anmeldetag: 01.08.2006
(51) Int. Cl.: B60R 22/00

(54) **KOPF - EINPUNKT - SICHERHEITSGURT - SYSTEM**
HEAD SINGLE-POINT SAFETY BELT SYSTEM
SYSTEME DE CEINTURE DE SECURITE DE TETE A UN POINT

(30) Priorität: 12.09.2005 DE 102005045025
(43) Veröffentlichungstag der Anmeldung: 28.05.2008
(60) Teilanmeldung: 09006503.8
(73) Patentinhaber: Schmuecker, Hartmut, 89081 Ulm (DE)
(72) Erfinder: Schmuecker, Hartmut, 89081 Ulm (DE)
(86) Internationale Anmeldenummer: PCT/EP2006/007602
(87) Internationale Veröffentlichungsnummer: WO 2007/031153

(56) Entgegenhaltungen:
- WO-A-99/10208
- DE-A1- 4 306 555
- DE-U1- 9 410 151
- DE-U1- 9 420 262
- FR-A- 2 316 102
- FR-A- 2 721 880
- JP-A- 8 072 669

## Beschreibung

Die Erfindung ist zur Sicherung des Kopfes von Autofahrern bei Frontalzusammmenstößen gedacht.

Die bisherigen Drei-Punkt-Sicherheitsgurte halten nur die Körper der Autoinsassen zurück, nicht aber die Köpfe. Dadurch kommt es bei Autozusammenstößen zu Halswirbelsäulenverletzungen der Insassen oder zum häufigen Halswirbelsäulen - Schleudertrauma. Die Sicherung der Köpfe in solchen Fällen wird durch die vielen Variationen der Airbags versucht.

Airbags haben mehrere Nachteile:
- Begrenzte Einsatzbereitschaft nur bis zu einer Aufprallgeschwindigkeit von 50 kmh.
- Verzögerte Auslösungs- und Funktionszeit von etwa dreihundertstel Sekunden.
- Neben dem erschreckenden Aufblasknall kommt es zu einem harten Aufprall des Kopfes auf den Airbag. Die Nase wird platt gedrückt mit nachfolgenden Schmerzen.
- Die Elektronik löst bei einem Teil der Unfälle nicht aus.
- Manchmal löst die Elektronik den Airbag grundlos bei freier Fahrt ohne Unfall aus.
- Der Airbag ist für alle Brillen träger eine hohe Gefahr: Durch den Schlag des Airbags ins Gesicht werden alle Brillengestelle zerstört und außerdem Hautverletzungen erzeugt.
   Hat ein Brillenträger zerbrechliche Gläser, so sind Augenverletzungen durch Glassplitter die Folge. Lediglich teure Kunststoffgläser in Brillen halten den Aufpralldruck des Airbags aus ohne zu zerbrechen.
- Die vorderen Autostützsäulen an der Ecke von Frontscheibe zu Seitfenster sind durch die Airbag-Unterbringung so dick, daß das Blickfeld des Autofahrers stark eingeschränkt wird.

### Stand der Technik

Mehrere Vorschläge zur Sicherung des Kopfes durch Gurte bei Autoinsassen wurden gemacht: Patent FR - A - 2316102 von Satzinger, DE Pat. No. 4306555 A1 von Piltz, DE Gebrauchsmuster No. G 9001789.7 U1 von Handeck, DE Pat. No. 19614594 A1 von Kamal, DE Pat. No. 19855972 C2 von Tiziani, US Pat. No. 2004 / 0055077 A1 von Wright, FR-A-2721880 von Brossard, DE 9410151 U1 von Knefel, WO 99/10208 A von Joalto Design Inc (US), DE 9420262 U1 von Winkelmann und JP 08 072669 A von Aomu.

Satzinger beschreibt im gattungsbildenden FR-A-2316102 Sicherheitsgurte, die von der Stirn zum Hinterkopf in Kreuzung mit Gurten vom Schädeldach zum Unterkieferbereich am Kopf verlaufen. Dieses Gurtsystem ist durch einen nicht aufrollbaren weiteren Gurt, der vom Hinterkopf zur Kopfstütze zieht, an der Sitzlehne befestigt.

Piltz beschreibt im DE 4306555 A1 einen Kopfkappen-Rückhalte-Sicherungsgurt für Autofahrer mit Befestigung an der Kopfstütze der Vordersitze und Rücksitze. Hierbei ist der in die Kappe eingenähte Gurt hinten an der Kopfstütze des Sitzes befestigt. Er kann dort ganz fixiert sein oder nur um die Kopfstütze herumgeschlungen werden. Im Augenblick des Unfalles ist aber das Gurtband nicht straff und Halswirbelsäulenschäden sind deshalb nicht verhindert. Auch die Kopfkappe alleine ohne Kinngurt gibt beim Unfall nicht genug Halt.

Handeck beschreibt im DE-Gebrauchsmuster G 9001789.7 U1 eine Rückhaltevorrichtung für den Kopf von Kindern in einem eingebauten Kindersitz. Ein Stirngurt und ein Kinngurt halten den Kopf zurück. Ein mit Klettverschluß fixierter Rückhaltegurt vom Hinterkopf führt zum Einbaukindersitz. Bei dieser Lösung würde beim Frontalunfall im Augenblick des Zusammenstoßes nicht ein straffer Rückhaltegurt vorliegen und somit Halswirbelsäulenschäden auftreten können. Auch würde bei höherer Aufprallgeschwindigkeit sowohl Stirngurt als auch Kinngurt nach hinten rutschen und den Kopf nicht zuverlässig zurückhalten.

Kamal beschreibt im DE 19614594 A1 ein Kopf-Sicherheitsgurt-System vornehmlich für Formel - I - Rennwagenfahrer und in abgewandelter Form auch für andere PKW - Fahrer. Für letztere wird anstelle eines Helmes ein kreisförmiger fester Rahmen um den Kopf mit Kinnband vorgeschlagen, der von mehreren Textilbändern über das Schädeldach gehalten wird. Nach hinten wird dieser Rahmen über einen Schwenkbügel und ein Gurtschloß an den nach hinten führenden Gurt befestigt. Dieser Gurt führt durch entsprechende Führung zu einer eigenen Gurtaufrollvorrichtung mit zusätzlichem Gurtstrammer. Bei dieser Erfindung ist keine passende Größeneinstellung des Rahmens um den Kopf für verschiedene Autoinsassen vorgesehen, also im PKW - Praxisalltag nicht verwertbar. Auch bei einem Auffahrunfall von hinten besteht durch den Hinterkopfbügel mit Nackenschloß die Gefahr von Nacken- und Halswirbelsäulenschäden. Ein weiterer Gesichtspunkt dieser Erfindung ist, daß die Gurtaufrollvorrichtung mit Gurtstrammer einen ständigen Zug des Kopfes nach hinten bewirkt, was die Haltemuskulatur des Hals - Nacken - Bereiches ununterbrochen ausgleichen muß und dadurch ermüdet und sich verspannt.

Tiziani beschreibt im DE 19855972 C2 eine Vorrichtung zur Absicherung der Wirbelsäule und des Kopfes eines Kindes in einem Kraftfahrzeug. Hierbei wird der Kopf durch einen Helm mit einem Kinngurt gesichert. Am Schädeldach des Helmes ist der Rückhaltegurt angekoppelt. Der Rückhaltegurt führt zu einem mit einem Beschleunigungssensor ausgestatteten Gurtaufroller im Aufsatz der Rückenlehne des Kindersitzes. Der Helm wird am Kopfscheitel ständig durch den Gurtaufroller zurückgezogen in eine Reklination des Kopfes, was bei normaler Autofahrt Nackenschmerzen machen würde. Zwischen dem Kopfrückhaltesystem und dem Körperrückhaltesystem des Kindes besteht aber keine koordinierte, gleichstarke Wirkung, denn der Körper wird nicht von einem Gurtaufroller mit Beschleunigungssensor zurückgehalten. Durch ungleiches Zurückhalten von Kopf und Körper droht aber die Gefahr von Halswirbelsäulenschäden durch Unfall.

Wright beschreibt im US 2004 / 0055077 A1 einen Kopfhelm, der mit einem Bandapparat an den beiden senkrecht verlaufenden Körperrückhaltegurten starr befestigt wird. Hierbei ist ein starrer Kopf-Nacken-Abstand für die normale Autofahrt zu erwarten und somit eine eingeschränkte Kopfbeweglichkeit.

Brossard beschreibt im FR-A-2721880 für Autorennfahrer einen Gurt am Helm des Rennfahrers befestigt.

Knefel beschreibt im DE 9410151 U1 Sicherheitsgurte für den Kopf von Autofahrern mit und ohne Helmschutz.

Im Patent WO 99 /10208 der Joalto Design Inc. (US) wird ein Rückhaltegurt für Autofahrer mit Helm beschrieben.

Winkelmann beschreibt im DE 94 20 262 U1 eine Einrichtung zur Sicherung des Kopfes von Fahrzeugführern mit Schutzhelmen.

Aomu beschreibt im JP 08 072669 A eine Gurthalterung für Autofahrer mit Schutzhelmen. Die Gurtführung kann aus einem Gurt oder auch zwei Gurten mit jeweiligem eigenen Gurtaufroller bestehen.

### Problem

Die Aufgabe dieser Erfindung ist es, die Nachteile der derzeitigen Kopfrückhaltesysteme zu beseitigen und sie durch ein zuverlässigeres System zu ersetzen, welches leichtgewichtig und für den Benutzer einfach aufsetzbar ist, ohne die Bewegungsfreiheit oder den Komfort einzuschränken. Die Sicherung der Trägheitsbewegung des Kopfes von Autofahrern und Insassen auf Vordersitzen und Rücksitzen bei Zusammenstößen von vorne und von hinten ist mit der Trägheitsbewegung des Körpers passend herzustellen.

Dieses kann das Kopf - Einpunkt - Sicherheitsgurt - System.

### Erfindung

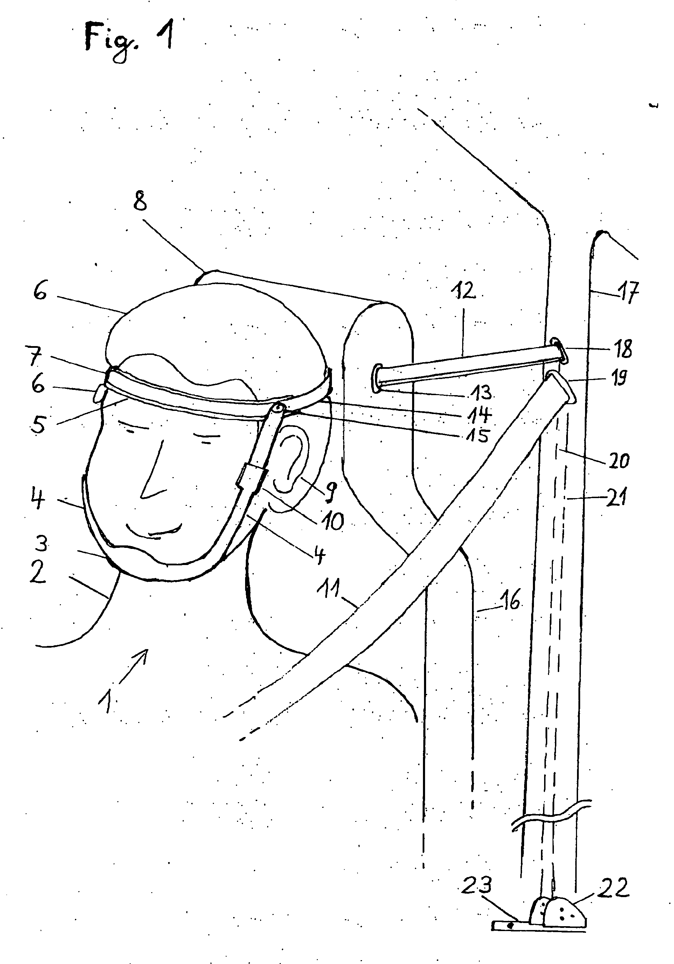

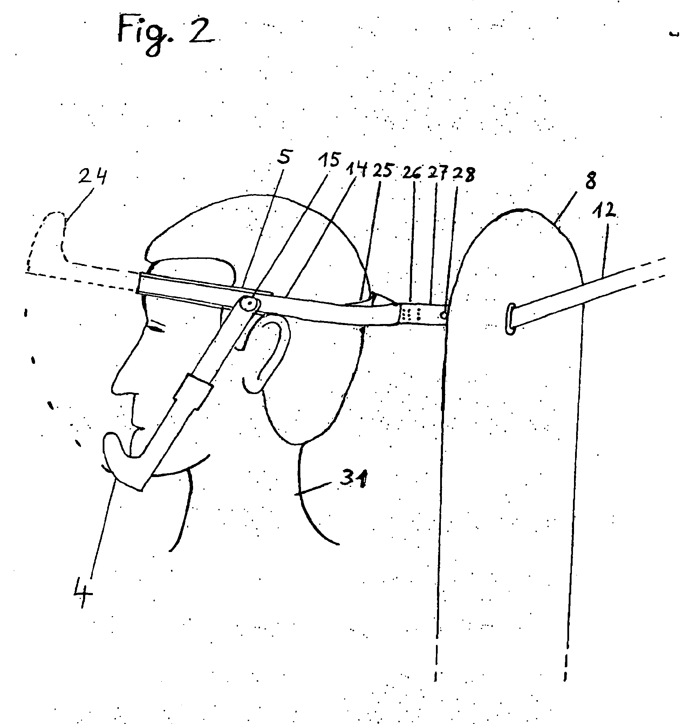

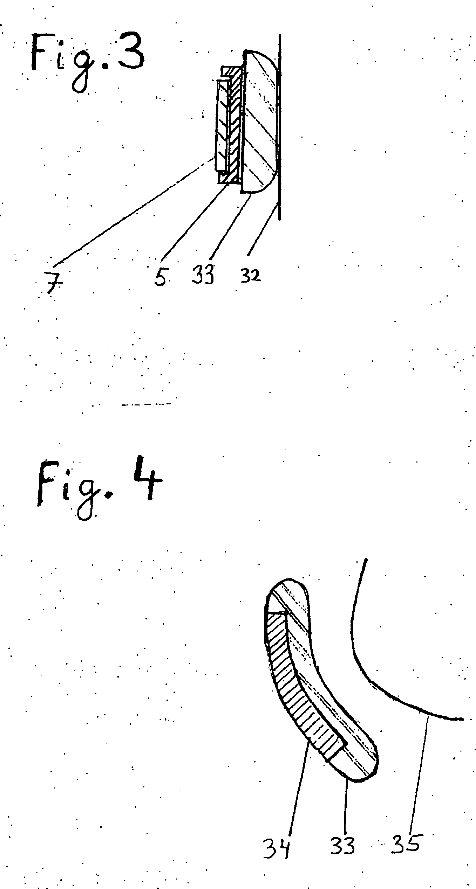

Die Erfindung löst das beschriebene Problem der Kopfzurückhaltung in Abstimmung mit dem Körper - Sicherheitsgurt eines Autofahrers oder Insassen bei Zusammenstößen von vorne oder hinten gemäß Fig. 1 bis 4 :
- Fig. 1: Kopf - Einpunkt - Sicherheitsgurt - System : Autofahrer von halbschräg - vorne gesehen
- Fig. 2: Kopf - Einpunkt - Sicherheitsgurt - System : Seitansicht
- Fig. 3: Aufbau des Kopfgurtes im Stirnbereich : Querschnitt
- Fig. 4: Aufbau des schalenförmigen Kinnbügels : Querschnitt

Das Kopf- Einpunkt - Sicherheitsgurt - System besteht aus einem etwa 2 - 3 cm breiten Stirngurt 7 , der in seiner vorderen Hälfte bis zu den Ohren 9 durch einen festeren Metall - oder Kunststoffbügel 5 unterlegt ist. Zur Kopfhaut 32 hin ist dieser Bügel 5 mit elastischem Material 33 von 0,5 - 1,0 cm Stärke abgedeckt zum Auffangen der Druckkräfte beim Frontalzusammenstoß. Überzogen ist das Kopfgurt-Sicherheits-System im Kopfbereich an Stirn- und Kinnteil mit hautfreundlichem Gewebe.

Am Stirnbügel 7 ist vor dem jeweiligen Ohr 9 ein Scharnier 15 mit Arretierungseinstellungen für einen herunterklappbaren, längenverstellbaren Kinnbügel 4, 24 angebracht.

Der Kinnbügel 4 hat im Kinnbereich eine schalenförmige Ausbildung 3, 33, 34 zur Übertragung der Druckkräfte auf die Haut der Kinnregion 35 bei Unfall. Im Ruhezustand hat er zum Kinn einen ca. ein Zentimeter Abstand zwecks Kinnbeweglichkeit für z.B. das Sprechen.

Der Kopfgurt 14 wird am Hinterkopf durch ein zusätzliches Klettverschlußband 25 von links und rechts verschlossen und so der jeweiligen Person passend aufgesetzt.

Die eigentlichen Kopfgurtenden 14 von jeder Kopfseite werden nach hinten weitergeführt und beim Einpunkt - Kopfsicherheitgurt -System etwa 4cm hinter dem Kopf zusammengeführt 26 und als ein gemeinsames Band 27 in die Mitte der intergrierten oder höhenverstellbaren Kopfstütze 8 hineingeführt, wo ein Umlenkmechanismus, z.B. in Form einer breiten Rolle 29 , den Gurt 12 zum Einlaßschlitz 18, 19 des Körpergurtes 11 bringt. Der Einlaßschlitz 18 kann auch separat vom Körpergurtschlitz 19 oberhalb angebracht werden.

Innerhalb der Autoaußenwand oder PKW - Mittelsäule 17 verläuft der Kopfgurt 20 parallel zum Körpergurt 21 zu einem Gurtaufroller 22 (und evtl. Gurtstrammer 23) mit der Eigenschaft, beiden Gurten 20, 21 bei normaler Autofahrt getrennt je nach Bedarf Gurtband zu liefern, aber beim Unfall beide Gurte total gleichzeitig zu blockieren.

Der Hinterkopf braucht je nach Haarpracht 6 einen ständigen Abstand von etwa 4 cm oder mehr, um nicht die unangenehmen Vibrationen des Fahrzeuges auf den Kopf und das Haar zu übertragen. Am rückführenden Gurt vom Hinterkopf 27 zur Kopfstütze 8 ist deshalb eine mechanische Sperre in Form eines Einsteckknopfes 28 oder einer Spange vorgesehen. Diese mechanische Gurteinzugssperre 28 begrenzt den ständigen Gurtaufrollerzug 22 , so daß die Haltemuskulatur des Nackens 2 vom ständigen Rückzug entlastet ist.

### Bezugszeichenliste

- 1: Autofahrer
- 2: Hals des Autofahrers
- 3: Schalenförmiger Kinnteil des Kinnbügels
- 4: Kinnbügel
- 5: Elastischer Stirnteil
- 6: Haar des Autofahrers
- 7: Stirnteil des Gurtes
- 8: Kopfstütze (integrierte)
- 9: Ohr des Autofahrers
- 10: Längenverstellmechanismus des Kinnbügels
- 11: Körper - 3 - Punkt - Sicherheitsgurt
- 12: Kopf-Sicherheitsgurt zur Autosäule führend
- 13: Auslaßschlitz an Kopfstütze
- 14: Kopfsicherheitsgurt am Hinterkopf
- 15: Scharnier am festen Stirnteil für Kinnbügel
- 16: Rückenlehne des Autofahrersitzes
- 17: PKW - Auto - Mittelsäule
- 18: Auslaßschlitz an Autosäule für Kopf - Sicherheitsgurt
- 19: Auslaßschlitz an Autosäule für Körper - Sicherheitsgurt
- 20: Kopf - Sicherheitsgurt in Autosäule
- 21: Körper-Sicherheitsgurt in Autosäule
- 22: Gurtaufroller
- 23: Gurtstrammer
- 24: Kinnbügel hochgeklappt
- 25: Hinterkopf - Klettverschluss
- 26: Einpunkt - Gurt - System : Zusammenführungsnaht
- 27: Einpunkt - Kopfsicherheitsgurt
- 28: Knopf oder Spange als Gurteinzugssperre
- 29: Umlenkrolle in Kopfstütze
- 30: Nase des Autofahrers
- 31: Hals des Autofahrers
- 32: Stirnhautoberfläche
- 33: Elastische Kunststoffauflage mit hautfreundlichem Überzug
- 34: Kinnbügel schalenförmig ausgebildet
- 35: Kinnhautoberfläche

## Patentansprüche

1. Kopf - Einpunkt - Sicherheitsgurt - System, bei dem der Kopf von Autofahrern (1), die einen Körper - Dreipunkt - Sicherheitsgurt (11) angelegt haben, bei einem Unfall mit Frontalaufprall geschützt wird durch einen Kopf - Sicherheitsgurt (12), der am Stirngurt (7) vor dem Ohr (9) einen mittels eines stufenförmig einrastbaren Scharniers (15) schwenkbaren und einrastbaren, längenverstellbaren Kinnbügel (4) hat und
**dadurch gekennzeichnet ist, daß**
der Kopf-Sicherheitsgurt (12) mit durch Metall - oder Kunststoffschiene verstärkter Stirnhälfte versehen ist.

2. Kopf - Einpunkt - Sicherheitsgurt - System nach Anspruch 1,
**dadurch gekennzeichnet, daß**
der Kopfgurt (12) hinten vor dem Einlassschlitz (13) in die Kopfstütze eine Sperre (28) hat gegen totale Gurtaufrollung .

3. Kopf - Einpunkt - Sicherheitsgurt - System nach Anspruch 1 und 2 ,
**dadurch gekennzeichnet, daß**
beim Unfall der separate Gurtaufroller des Kopf - Sicherheitsgurtes (12) die absolut zeitgleiche Blockierung des Gurtaufrollers des Körper- Sicherheitsgurtes (11) hat.

## Claims

1. Head single-point safety belt system with which the heads of motorists (1) who have fastened a body three-point safety belt (11) are protected in the event of a head-on collision by a head safety belt (12) featuring a snap-in chin hoop (4) of adjustable length hinged forward of the ear (9) to the front portion (7) of said head safety belt by a multistage snap-in joint (15), and which
is **characterised in that**
the front half of the head safety belt (12) is reinforced by a metal or polymer element.

2. Head single-point safety belt system according to claim 1,
**characterised in that**,
at the rear, forward of the head restraint's inlet slot (13), the head safety belt (12) has a blocking mechanism (28) to prevent total belt retraction.

3. Head single-point safety belt system according to claims 1 and 2,
**characterised in that**,
in the event of an accident, the separate belt retractor for the head safety belt (12) blocks at exactly the same instant as the belt retractor for the body safety belt (11).

## Revendications

1. Système de ceinture de sécurité de tête à un point avec lequel la tête des conducteurs (1) qui ont attaché une ceinture de sécurité de tête à trois points (11), sera protégée en cas d'accident avec impact frontal grâce à la ceinture de sécurité de tête (12) qui est munie, sur la sangle du front (7), devant l'oreille (9), d'un étrier de menton (4) pivotant et éclipsable au moyen d'une charnière (15) éclipsable en échelons, et réglable en longueur et
**se caractérisant par le fait que**
la ceinture de sécurité de tête (12) est munie de demi-pièces frontales renforcées d'un rail en métal ou en plastique.

2. Système de ceinture de sécurité de tête à un point selon la revendication 1,
**se caractérisant par le fait que**
la ceinture de sécurité de tête (12) est dotée d'un blocage (28) contre le déroulement total de la ceinture, devant la fente d'entrée (13) dans l'appui-tête.

3. Système de ceinture de sécurité de tête à un point selon les revendications 1 et 2,
**se caractérisant par le fait que**
en cas d'accident, l'enrouleur de ceinture à part de la ceinture de sécurité de tête (12) se bloque absolument simultanément avec l'enrouleur de la ceinture de sécurité du corps (11).
